# EUROPÄISCHE PATENTSCHRIFT

(11) **EP 1 470 473 B1**
(45) Veröffentlichungstag und Bekanntmachung des Hinweises auf die Patenterteilung: **30.08.2006**
(21) Anmeldenummer: 03734708.5
(22) Anmeldetag: 28.01.2003
(51) Int. Cl.: G06F 3/12

(54) **VERFAHREN, COMPUTERSYSTEM UND COMPUTERPROGRAMM-MODUL ZUM ERSTELLEN VON DOKUMENTENBEARBEITUNGSAUFTRÄGEN AUS VARIABLEN, SEITENINDIVIDUELLEN DATEN UND AUS RESOURCENDATEN**
METHOD, COMPUTER SYSTEM AND COMPUTER PROGRAM FOR PRODUCING DOCUMENT PROCESSING ORDERS FROM VARIABLE, PAGE-INDIVIDUAL DATA AND FROM RESOURCE DATA
PROCEDE, SYSTEME INFORMATIQUE ET MODULE DE PROGRAMME D'ORDINATEUR POUR L'ETABLISSEMENT D'INSTRUCTIONS DE TRAITEMENT DE DOCUMENTS A PARTIR DE DONNEES VARIABLES, INDIVIDUELLES PAR PAGE ET A PARTIR DE DONNEES DE RESSOURCES

(30) Priorität: 31.01.2002 DE 10203870
(43) Veröffentlichungstag der Anmeldung: 27.10.2004
(73) Patentinhaber: Océ Printing Systems GmbH, 85586 Poing (DE)
(72) Erfinder: GNAEDIG, Armin, 80997 München (DE)
(74) Vertreter: Schaumburg, Thoenes, Thurn, Landskron
(86) Internationale Anmeldenummer: PCT/EP2003/000856
(87) Internationale Veröffentlichungsnummer: WO 2003/065198

(56) Entgegenhaltungen:
- EP-A- 0 782 068
- WO-A-02/02327

## Beschreibung

Die Erfindung betrifft ein Verfahren, ein Computersystem und ein Computerprogramm-Modul zum Erstellen von Dokumentenbearbeitungsaufträgen aus variablen, seitenindividuellen Daten und aus Resourcendaten. Bei Dokumentenbearbeitungsaufträgen, die zum Zwecke des Ausdruckens an elektrografische Hochleistungsdrucksysteme gesandt werden, deren Druckgeschwindigkeit etwa 40 Seiten bis zu über 1.000 DIN A4 Seiten pro Minute beträgt, werden vielfach sogenannte Resourcendaten verwendet, die zur wiederkehrenden Verwendung in gesonderten Speicherbereichen eines Computers bereitgehalten werden. Diese Verfahrensweise eignet sich insbesondere zum Drucken und elektronischen Archivieren von Dokumenten, die seitenweise individuell gestaltet sind, wobei die Dokumentendaten seitenweise aus Resourcendaten, z.B. Formulardaten, und aus variablen Daten, z.B. kundenspezifischen Daten aus einer Datenbank, zusammengesetzt werden.

In der Veröffentlichung "Das Druckerbuch, Dr. Gerd Goldmann (Hsg.), Océ Printing Systems GmbH, Poing, 6. Ausgabe (Mai 2001)", ISBN 3-00-001019-X, sind im Kapitel 14 sogenannte Océ PrismaPro Serversysteme beschrieben, die in der Lage sind, oben genannte Druckaufträge zu bearbeiten. Dazu sind verschiedene Systemkomponenten vorgesehen, die für eine weitgehende Automatisierung bei der Erstellung eines Druckauftrages sorgen. Mittels eines Print Job-Managers können Druckaufträge auf einer beliebigen Kundenkonsole in einem Kundennetz erzeugt werden und diese an ein Order Distribution System übertragen werden. Dabei kann der Print Job-Manager nicht nur Druckaufträge verschicken, es ist auch möglich, mittels eines Resource-Managers verschiedene Resourcen-Daten, d. h. vorgegebene, für mehrere Druckaufträge verwendbare Daten, zu verwalten. Sie werden im Druckserver erzeugt bzw. geladen und zur mehrfachen Verwendung gespeichert. Derartige Resourcen sind z.B. Fonts, Bilder, Logos, Seitensegmente (page segments) oder Überlagerungsdaten (overlays). Die Druckdaten können dabei statt oder zusätzlich zum Drucken in einem elektronischen Archiv abgespeichert werden.

Bei der Erstellung von Dokumentenbearbeitungsaufträgen können auch sogenannte Job Tickets verwendet werden, d.h. Dateien, in denen Begleitinformationen zu den Dokumentenbearbeitungsaufträgen enthalten sind, z. B. zur Verwendung von bereits in einem Druckserver oder Archivierungsserver abgespeicherten Resourcen.

Ein typisches Druckdatenformat für elektronische Produktions-Druck-Umgebungen, in dem Resourcen vorgesehen sind, ist das Format Advanced Function Presentation (AFP). Dieses Druckdatenformat ist beispielsweise in der Publikation Nr. F-544-3884-01 der Firma International Business Machines Corp. (IBM) mit dem Titel "AFP Programming Guide and Line Data Reference" beschrieben.

Bei der Verarbeitung von Druckaufträgen in einem Druckproduktionsumfeld kommt es maßgeblich darauf an, eine möglichst performante, flexible Verarbeitung der Druckaufträge zu ermöglichen, um eine hohe Auslastung der angeschlossene Produktionsdrucker und damit eine hohe Produktivität zu erreichen.

In dem Dokument ISIS Papyrus Document System 5 vom 1. Dezember 2001, veröffentlicht im Internet unter http://www.isispapyrus.com sind typische Arbeitsabläufe an Dokumentenbearbeitungsaufträgen in AFP-Umgebungen beschrieben.

Aus der DE 693 26 789 T2 sind verschiedene Methoden zum Speichern und Verwalten von Ressourcen bekannt.

In der EP-A-0 782 068 ist ein Desktop Drucksystem beschrieben, mit dem ein Dokument erstellt und auf einem entfernt gelegenen Drucker gedruckt werden kann. Das Drucksystem holt Formatierungsinformationen zum Dokument ein und berücksichtigt die vom Benutzer gewünschten Druck- und Bindungspräferenzen, die Papiersorte und -farbe sowie eine Bindungssorte einschließen, sowie das Trennen der Abschnitte des Dokuments.

Aus der WO-A-02 02327 ist ein Drucker beschrieben, der mit einem Modus versehen ist, mit dem Formulare ohne Referenz zu einem Host-Computer und ohne Unterbrechung bearbeitet und gedruckt werden können, wobei ein oder mehrere Formulare sofort gedruckt werden können. Dokumente können auf der Steuerungsanzeige aufgelistet werden, um zum sofortigen Druck ausgewählt zu werden.

Aufgabe der Erfindung ist es, das Erstellen von Dokumentenbearbeitungsaufträgen, in denen Resourcendaten verwendet werden, möglichst flexibel und mit hoher Produktivität zu ermöglichen.

Diese Aufgabe wird durch die in den unabhängigen Ansprüchen angegebene Erfindung gelöst. Vorteilhafte Ausführungsformen der Erfindung ergeben sich aus den Unteransprüchen.

Erfindungsgemäß sind zum Erstellen eines Dokumentenbearbeitungsauftrages aus variablen, seitenindividuellen Daten und aus Resourcendaten, die für eine Vielzahl von Seiten verwendbar sind, in dem Dokumentenbearbeitungsauftrag Steuerungsdaten enthalten, die angeben, welche Resourcendaten für den Dokumentenbearbeitungsauftrag benötigt werden. Die Resourcendaten, welche in Dateien in einem oder mehreren Verzeichnissen eines Computers gespeichert sind, werden mittels eines Computerprogramms verwaltet, mit dem die Suchreihenfolge für eine benötigte Resourcen verzeichnisweise und/oder dateiweise vom Benutzer festlegbar ist. Den Verzeichnissen und/oder Resourcendateien sind zusätzlich zu den im Computer vergebenen Systemnamen frei wählbare Alias-Namen vom Benutzer zuordenbar, wobei vom Benutzer zwischen einem ersten Ansichtsmodus, in dem die Resourcen mit ihrem Aliasnamen auf einen Anzeigemittel wie einem Anzeigemittel angezeigt werden und einen zweiten Ansichtsmodus, mit dem die Resourcendateien mit ihrem Systemnamen auf dem Anzeigemittel angezeigt werden, umgeschaltet werden kann.

Die Erfindung ermöglicht, das einfache und übersichtliche Zuordnen von Verzeichnissen und ggf. aller einem Verzeichnis untergeordneten Unterverzeichnisse, die in einer bestimmten Reihenfolge für bestimmte Resourcen zu durchsuchen sind. Dabei ist es insbesondere vorteilhaft, einen Alias-Namen für einen kompletten Verzeichnispfad, das heißt für ein übergeordnetes Verzeichnis einschließlich aller seiner Unterverzeichnisse, zu vergeben. Die Systemnamen der Verzeichnisse können dabei wahlweise manuell eingegeben werden oder über ein Suchmenü aus den im System vorhandenen Verzeichnissen ausgewählt werden.

Die Möglichkeit, zwischen den beiden Ansichtsmodi zu wechseln erlaubt es dabei, einerseits einen guten Überblick über alle verfügbaren bzw. einem Druckauftrag zugeordneten Resourcen mittels der zugeordneten Alias-Namens zu bekommen und andererseits im zweiten Ansichtsmodus den genauen Speicherort bzw. den genauen Systemnamen, der den entsprechenden Resourcennamen auf dem Computersystem zugeordnet ist, ablesen zu können. Die Verwendung übersichtlicher Alias-Namen ermöglicht es zudem weniger geübten Bedienern des Systems eine korrekte Zuordnung von Resourcen zu einem Druckauftrag durchzuführen. Durch die Umschaltbarkeit der Ansichtsmodi ist das Verwaltungsprogramm sowohl für diese ungeübten Benutzer als auch für Systemexperten, die bevorzugt die genauen Systemadressen der Resourcen verwenden, möglich.

In einer vorteilhaften Ausführungsform der Erfindung werden durch das Computerprogramm auf dem Anzeigemittel zwei Fenster eingeblendet, nämlich ein Verfügbarkeitsfenster, in dem die im Computer verfügbaren Resourcenverzeichnisse und/oder Resourcendateien dargestellt werden und ein zweites Fenster, nämlich ein Auswahlfenster, in dem die für den jeweiligen Dokumentenbearbeitungsauftrag ausgewählten Resourcenverzeichnisse und/oder Resourcendateien angezeigt werden. Resourcenverzeichnisse und/oder Resourcendateien können im Verfügbarkeitsfenster markiert werden und durch Auswahl eines Transfer-Menüpunkts dem Dokumentenbearbeitungsauftrag zugeordnet und im Auswahlfenster dargestellt werden.

In einem weiteren Verarbeitungsschritt kann mittels des Computerprogramms festgelegt werden, welche Dateibestandteile, insbesondere welche Dateiendungen zum Suchen nach Resourcen-dateien eines vorgegebenen Resourcentyps verwendet werden. Mittels der ausgewählten Dateibestandteile kann des weiteren festgelegt werden, in welcher Reihenfolge die zugeordneten Resourcendateien zum Finden bestimmter Resourcen durchsucht werden. Hierdurch ist es möglich, in einem Computersystem mehrere Dateien zum selben Resourcentyp gespeichert zu halten und auftragsindividuell festzulegen, welche Resourcendateien verwendet werden sollen. Dies ist besonders vorteilhaft, wenn Dokumentenbearbeitungsaufträge, die in größeren zeitlichen Abständen wiederholt abgearbeitet werden müssen und bei denen die verwendenden Resourcendaten jeweils exakt dieselben sein sollen, auf Resourcendateien zugreifen, die zwischenzeitlich für neuere Druckaufträge verändert wurden. Durch Verwendung neuer Dateinamensbestandteile können diese Resourcendateien desselben Typs dann auftragsspezifisch zugeordnet und verwendet werden.

Zur einfacheren Verwaltung der Resourcendateien kann insbesondere vorgesehen sein, die Anzeige der verschiedenen Resourcentypen auf dem Anzeigemittel derart zu bewirken, das unterscheidbar ist, ob die zugehörigen Resourcendateien in den zugeordneten Verzeichnissen vorhanden sind oder nicht vorhanden sind. Dabei kann beispielsweise vorgesehen werden, Resourcentypen, zu denen keine Resourcendateien vorhanden sind, ausgegraut oder farblich markiert anzuzeigen.

In einer Weiterbildung der Erfindung ist vorgesehen, die ausgewählten Resourcenverzeichnisse und/oder Resourcendateien mit ihren jeweiligen Suchreihenfolgen als Profil abzuspeichern. Ein solches Profil kann dann zu einem nachfolgenden Dokumentenbearbeitungsauftrag aus mehreren Profilen ausgewählt werden.

Das erfindungsgemäße Verfahren bzw. erfindungsgemäße Systeme sind insbesondere zur Verwendung für Druckaufträge oder für elektronische Archivierungsaufträge vorgesehen, können jedoch auch für andere Dokumentenverarbeitungsaufträge wie beispielsweise der Weiterleitung oder Verteilung von Dokumenten in einem anderen System, z.B. an verschiedene e-mail-Adressen verwendet werden.

Weitere Ausführungsbeispiele und Vorteile der Erfindung werden nachfolgend anhand einiger Figuren näher erläutert.

Es zeigen:

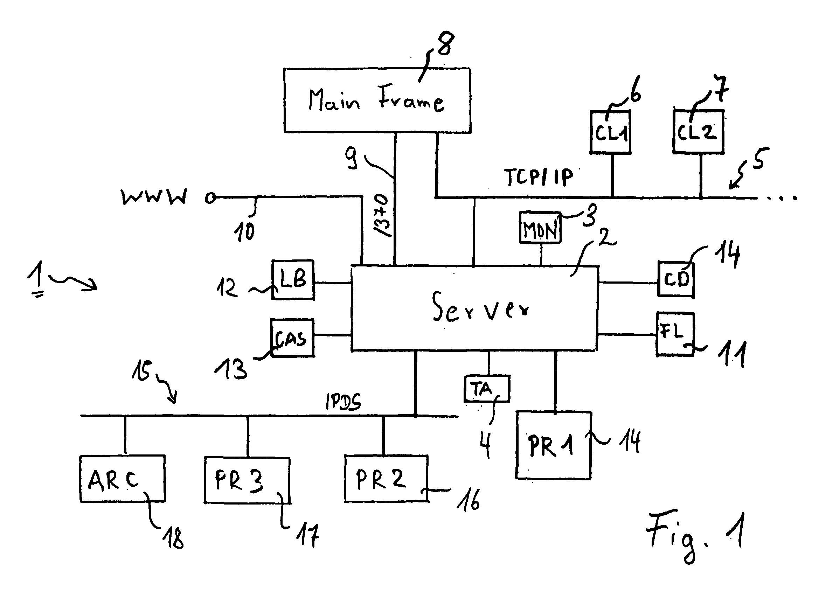

- Figur 1:: Ein Druckproduktionssystem
- Figur 2:: Ein Anzeigefenster für vordefinierte und ausgewählte Bibliotheken
- Figur 3:: Ein Anzeigemenü für Bibliotheken in einer Dateistruktur sowie ausgewählte Bibliotheken
- Figur 4:: Verfügbare und ausgewählte Bibliotheken
- Figur 5:: Ein Auswahlmenü für vordefinierte und ausgewählte Dateiendungen sowie
- Figur 6:: Ein Auswahlmenü für verfügbare und ausgewählte Resourcendateien

In einem Druckproduktionssystem 1 ist ein Computer als Druckdatenserver 2 eingesetzt. Er ist mit einem Monitor 3 und mit einem Eingabemittel 4 (Tastatur oder Maus) ausgestattet. Statt dem Monitor 3 könnte auch eine andere Anzeigevorrichtung wie z.B. ein LCD-Display, ein LED-Display, ein Projektionsgerät (Beamer) oder ein beliebiges anderes Anzeigemittel, das zum Anzeigen von elektronisch kodierten Informationen geeignet ist, verwendet werden. Auf dem Druckdatenserver 2 läuft ein Computerprogramm ab, mit dem die Daten von Druckaufträgen von verschiedenen Eingabekanälen an verschiedene Ausgabekanäle weitergeleitet werden können. Eingangsseitig ist ein erstes Netzwerk 5 vorgesehen, an dem verschiedene Client-Computer 6,7 sowie ein Großcomputer 8 (MainFrame) angeschlossen ist. Vom Großcomputer 8 besteht auch eine direkte, vom Netzwerk 5 unabhängige Datenverbindung 9, ein sog. /370-Kanal. Desweiteren ist der Druckdatenserver 2 in der Lage, Druckaufträge von einem Wide Area Network (WAN) wie z.B. das Internet über die Schnittstelle 10 zu empfangen. Weiterhin können Druckdaten oder wahlweise auch Resourcendaten über eine CD-ROM-Schnittstelle 14, über ein Diskettenlaufwerk 11, über ein Langband 12 oder über ein Cassetten-Laufwerk 13 eingespielt werden.

Der Druckdatenserver 2 kann im Prinzip beliebige Druckdaten in beliebigen Druckdatensprachen wie z.B. Postscript (PS) Page Command Language (PCL) und insbesondere AFP-Datenströme verarbeiten. Druckdaten, die in variable Daten und Resourcen-Daten unterteilt sind, werden im Druckdatenserver 2 zusammengebracht, sodass ein vollständiger Datenstrom entsteht. Die Resourcendaten können dabei bereits mit den Druckdaten an den Druckdatenserver 2 übermittelt werden oder an der Datenquelle der variablen Daten an einen speziell dafür vorgesehenen Speicherort hinterlegt sein, z.B. im Mainframe-Computer oder sie können aber auch über eine andere Schnittstelle an den Druckdatenserver 2 geliefert werden als die variablen Daten; beispielsweise können variable Daten sowie Auftragsdaten, die Informationen über die benötigten Resourcen beinhalten vom Netzwerkcomputer 6 an den Druckserver 2 übermittelt werden, wobei der Druckserver 2 aus den übermittelten Auftragsdaten feststellt, welche Resourcen benötigt werden und dann gemäß einer vorgegebenen Reihenfolge in dem Dateisystem (file system) des Druckservers 2 und/oder in einem gemounteten Dateisystem, d.h. in einem im Druckserver 2 verfügbaren, logischen Dateisystem, das jedoch physikalisch in einem anderen Computer wie z.B. dem Host Computer 8 gespeichert ist, gesucht werden.

Im Druckdatenserver 2 wird aus den eingangsseitig verarbeiteten variablen und statischen Daten ein Ausgangsdatenstrom gebildet, der für die ausgangsseitig angeschlossenen Geräte angepaßt ist. Für Druckgeräte werden die Eingangsdatenströme hierzu in das ausgangsseitige Druckdatenformat Intelligent Printer Data Stream (IPDS) konvertiert und ausgangsseitig z.B. an einen ersten Drucker 14a oder an ein zweites Netzwerk 15 übermittelt, an dem wiederum zwei Druckgeräte 16, 17 sowie ein Archivierungsgerät 18 angeschlossen sind.

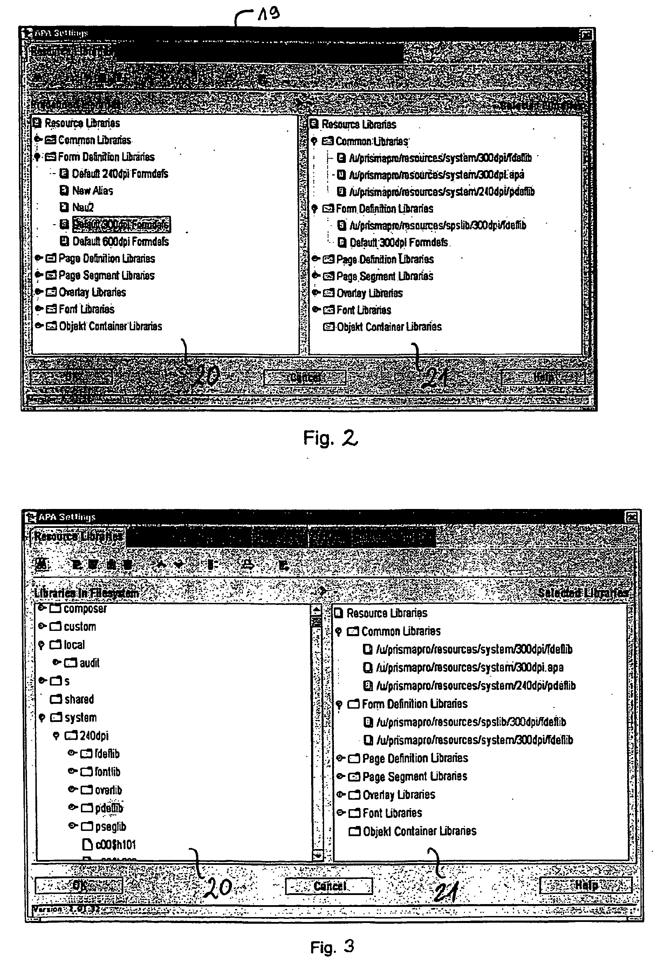

In Figur 2 ist ein Anzeigefenster gezeigt, welches durch das im Druckdatenserver 2 ablaufende Steuerungsprogramm zum Verwalten von Resourcendaten angezeigt wird. In der Bildmitte wird dabei ein Verfügbarkeitsfenster 20 und ein Auswahlfenster 21 gezeigt. Im Verfügbarkeitsfenster 20 werden nur die im Druckserver 2 bereits vordefinierten bzw. verfügbaren Resourcen angezeigt, wobei das Verfügbarkeitsfenster 20 in der Ansicht "PREDEFINED LIBRARIES", d.h. in der Ansicht mit Alias-namen dargestellt ist. Etwaige zusätzliche Elemente, die in der Steuerungsdatei des Druckauftrages, d.h. in dem Job Ticket, enthalten sind, werden hier nicht angezeigt. Innerhalb der Verfügbarkeitsfenster 20 sind in der Ansicht "Predefined Libraries", die die Alias-Namen angibt, Einträge ihrer letzten Verwendung angezeigt.

Im Auswahlfenster 21 werden die im Zuge eines Druckauftrags benötigten Elemente (Resourcen) angezeigt, welche in der Steuerungsdatei (JobTicket) des Druckauftrages enthalten sind. Durch das Computerprogramm, das das Anzeigemenü 19 erzeugt, wird auch überprüft, welche der im rechten Baum aufgeführten Elemente (Resourcen) innerhalb des Druckdatenservers 2 und der an ihn angeschlossenen und für ihn verfügbaren Resourcendatenquellen vorhanden sind. Die Überprüfung findet anhand der tatsächlichen Systemnamen statt, da in der Jobticket-Datei kein Alias-Name gespeichert ist. Elemente, die im geladenen Jobticket aufgeführt sind, aber -unabhängig von der gewählten Ansicht- nicht in der Predefined Liste 20 enthalten sind, werden beim Laden der Jobticket-Datei geprüft und dann im Auswahlfenster 21 Kursiv dargestellt.

Figur 3 zeigt das Verfügbarkeitsfenster 20 in der Ansicht "LIBRARIES IN FILESYSTEM", d. h. die Verzeichnisse bzw. Dateinamen in den vom Druckserver 2 vergebenen Systemnamen. Dabei sind alle verfügbaren Resourcen des Druckdatenservers 2 im Verfügbarkeitsfenster 20 im Ansichtsmodus der tatsächlichen Systemnamen dargestellt. Die Ansicht ist alphabetisch sortiert und zeigt alle System-Pfade ausgehend von einem übergeordneten Resourcenpfad.

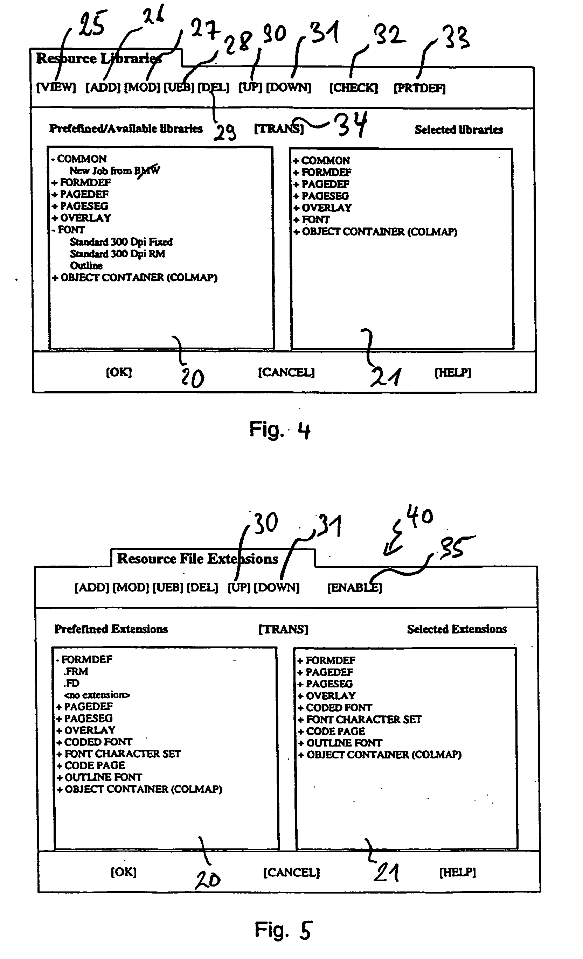

In Figur 4 sind die Fenster der Figuren 2 und 3 nochmals schematisch dargestellt. Im Verfügbarkeitsfenster 20 sind die Resourcen mit den Aliasnamen COMMON (mit Unterverzeichnis NewJob), FORMDEF, PAGEDEF, PAGESEG, OVERLAY, FONT (mit Unterverzeichnissen) und OBJECT CONTAINER angegeben. Durch Betätigen der Schaltfläche 25 (VIEW) kann zwischen der Anzeige der Aliasnamen im Verfügbarkeitsfenster 20 (siehe Figur 2) und der Anzeige der entsprechenden, hinterlegten Systempfade bzw. Systemdateien gewechselt werden. Mit der Schaltfläche 26 können im Modus der Aliasnamen weitere Resourcen in die Liste der vordefinierten Resourcen aufgenommen werden. Dabei kann jedem Aliasnamen ein Systempfad alleine, ein Systempfad mit allen seinen Unterverzeichnissen und/oder einzelne Systemdateien zugeordnet werden. Mit der Schaltfläche 27 (MOD) können Einträge in der Job-Ticket-Datei verändert werden. Diese Schaltfläche ist nur verfügbar, wenn in dem Auswahlfenster 20 (Predefined View) ein Element selektiert ist. Ist dieses Element auch im Auswahlfenster 21 vorhanden, so ändert sich dessen Name analog zur Änderung im Verfügbarkeitsfenster 20. Wenn ein Element im Auswahlfenster 21 selektiert ist kann mittels der Schaltfläche 28 das entsprechende Element im Auswahlfenster 20 unter dem gleichen System-Pfad gesucht werden wie das Element des Auswahlfensters 21.

Mit den Schaltflächen 30 und 31 (UP, DOWN) können Resourcen innerhalb der Fenster 20, 21 nach oben bzw. unten verschoben werden und damit hinsichtlich der Reihenfolge, nach denen bei der Verarbeitung des Druckauftrages Resourcen in den entsprechenden Resourcen-Verzeichnissen bzw. Resourcen-Dateien gesucht werden, verändert werden.

Durch Betätigen der Schaltfläche 32 wird eine Überprüfung durchgeführt, ob die im Verfügbarkeitsfenster 20 und im Auswahlfenster 21 gezeigten Resourcen existieren. Dabei werden nicht existierende Einträge durch Rotfärbung markiert ohne den Schriftstil der Einträge zu ändern. Bei der Überprüfung werden die angegebenen Resourcen in der gleichen Reihenfolge abgeprüft, wie sie beim späteren Weiterberarbeiten (Drucken) durchsucht werden. Es werden also die für diesen Resourcentyp angegebenen Systempfade mit den für den Resourcentyp spezifizierten Dateibestandteilen (Extensions) durchsucht. Das erste Auffinden des Elements wird dann angezeigt. Mit der Schaltfläche 29 DEL können eine oder mehrere Resourcenelemente, auch über zwei Grenzen hinweg, selektiert und gelöscht werden. Bevor die Resource tatsächlich gelöscht wird, erfolgt eine Abfrage "Wollen Sie die selektierten Einträge wirklich löschen?", die mit OK oder Abbrechen zu beantworten ist.

Mit der Schaltfläche 33 PRTDEF kann für einen Druckauftrag festgelegt werden, ob eine Resourcenquelle, die im weiterverarbeitenden Gerät (Drucker) existiert, verwendet werden soll (PRTDEF ein) oder ob derartige Resourcen ignoriert werden sollen (PRTDEF aus).

Mit der Schaltfläche TRANS 34 können Resourcen, die im Auswahlfenster 21 vorhanden sind zu den im Druckserver verfügbaren und im Verfügbarkeitsfenster 20 angezeigten Resourcen kopiert werden. Dabei werden die Resourcen automatisch in ein passendes Verzeichnis des Auswahlfensters 21 übertragen.

Figur 5 zeigt ein Einstellfenster 40, mit den Erweiterungen von Dateinamen (sog. Extensions) zugeordnet werden können. Im Verfügbarkeitsfenster 20 sind dabei z.B. unter der Resource "FORMDEF" 3 Dateierweiterungen in der Reihenfolge .FRM, .FD, <no Extension> angegeben. Dies hat zur Folge, das bei der Durchsuchung der Resourcen zu "FORMDEF" zunächst die Dateien mit der Endung FRM, dann Dateien mit der Endung FD und schließlich FORMDEF-Dateien ohne "."-Endung nach Resourcen durchsucht werden.

Mit den Schaltflächen 30 UP und 31 DOWN können markierte Dateibezeichnungen nach oben bzw. nach unten geschoben werden, so daß sich die Suchreihenfolge verändert.

Mit der Schaltfläche ENABLE 35 ist es möglich, die Verwendung von Dateierweiterungen (Extensions) generell zu unterdrücken, so daß auch deren Einfluss auf die Suchreihenfolge unterdrückt ist. Bei Betätigung der ENABLE-Schaltfläche 35 werden die Anzeigen im Verfügbarkeitsfenster 20 und im Auswahlfenster 21 ausgegraut dargestellt, so daß die Deaktivierung der Dateiendungen sofort visuell erkennbar ist. Im Anzeigefenster 40 "Recource File Extensions" gibt es keine Schaltfläche zum Umschalten der Ansichten von Aliasnamen auf tatsächliche Systemnamen bzw. Systempfade.

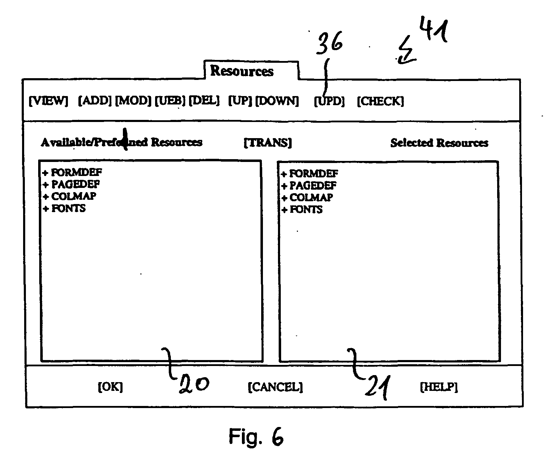

In Figur 6 ist ein Anzeigefenster 41 gezeigt, mit dem verfügbare Resourcen im Verfügbarkeitsfenster 20 und ausgewählte Resourcen im Auswahlfenster 21 dargestellt werden. Die Einträge entsprechen den Resourcen, welche in den Resourcenbibliotheken der Figuren 2, 3 und 4 unter Berücksichtigung der Dateierweiterungen der Figur 5 auf dem System gefunden werden. Durch Betätigen der Schaltfläche UPD 36 werden die verfügbaren Resourcen automatisch aktualisiert, wenn in einem der anderen, zuvor genannten Fenstern eine Veränderung vorgenommen wurde.

### Bezugszeichenliste

- 1: Druckproduktionssystem
- 2: Druckdatenserver
- 3: Monitor
- 4: Tastatur
- 5: Erstes Netzwerk
- 6: Client-Computer
- 7: Client-Computer
- 8: MainFrame Rechner
- 9: /370-Kanal
- 10: Internet-Schnittstelle
- 11: Diskettenlaufwerk
- 12: Langband
- 13: Kassettenlaufwerk
- 14: CD-ROM-System
- 14a: Druckgerät
- 15: Netzwerk
- 16: Druckgerät
- 17: Druckgerät
- 18: Archivierungsgerät
- 19: Anzeigenmenü
- 20: Verfügbarkeitsfenster
- 21: Auswahlfenster
- 25: Anzeige-Schaltfläche
- 26: Add-Schaltfläche
- 27: Mod-Schaltfläche
- 28: Ueb-Schaltfläche
- 29: Lösch-Schaltfläche
- 30: Up-Schaltfläche
- 31: Down-Schaltfläche
- 32: Check-Schaltfläche
- 33: PRTDEF-Schaltfläche
- 34: Trans-Schaltfläche
- 35: Enable-Schaltfläche
- 36: Resourcen-Aktualisierungsschaltfläche
- 41: Dateinamen-Einstellfenster

## Patentansprüche

1. Verfahren zum Erstellen eines Dokumentenbearbeitungsauftrages aus variablen, seitenindividuellen Daten und aus Resourcendaten, die für eine Vielzahl von Seiten verwendbar sind, wobei
(a) in dem Dokumentenbearbeitungsauftrag Steuerungsdaten enthalten sind, die angeben, welche Resourcendaten für den Dokumentenbearbeitungsauftrag benötigt werden,
(b) die Resourcendaten als Dateien in mindestens einem Verzeichnis eines Computers (2) gespeichert sind und
(c) die Resourcendateien mittels eines Computerprogramms verwaltet werden, mit dem
(c1) die Reihenfolge zum Suchen einer benötigten Resource verzeichnisweise und/oder dateiweise vom Benutzer festlegbar ist (30, 31),
(c2) den Verzeichnissen und/oder Resourcendateien zusätzlich zu den im Computer (2) vergebenen Systemnamen frei wählbare Aliasnamen vom Benutzer zuordenbar sind (26) und
(c3) vom Benutzer zwischen einem ersten Ansichtsmodus, in dem die Resourcen mit ihrem Aliasnamen auf einem Anzeigemittel (3) angezeigt werden und einem zweiten Ansichtsmodus, in dem die Resourcendateien mit ihrem Systemnamen auf dem Anzeigemittel (3) angezeigt werden, umgeschaltet werden kann (25).

2. Verfahren nach Anspruch 1, wobei in einem durch das Computerprogramm auf dem Anzeigemittel (3) angezeigten Verfügbarkeitsfenster (20) die im Computer (2) verfügbaren Resourcenverzeichnisse und/oder Resourcendateien dargestellt werden und in einem auf dem Anzeigemittel (3) angezeigten Auswahlfenster (21) die für den Dokumentenbearbeitungsauftrag ausgewählten Resourcenverzeichnisse und/oder Resourcendateien.

3. Verfahren nach Anspruch 2, wobei die Resourcenverzeichnisse und/oder Resourcendateien im Verfügbarkeitsfenster (20) markiert werden und durch Auswahl einer Transfertaste (34) dem Dokumentenbearbeitungsauftrag zugeordnet und im Auswahlfenster (21) dargestellt werden.

4. Verfahren nach einem der vorhergehenden Ansprüche, wobei mittels des Computerprogramms festgelegt wird, welche Dateibestandteile, insbesondere welche Dateinamenendungen, zum Suchen nach Resourcendateien eines vorgegebenen Resourcentyps verwendet werden.

5. Verfahren nach Anspruch 4, wobei mittels der ausgewählten Dateibestandteile festgelegt wird, in welcher Reihenfolge die zugeordneten Resourcendateien durchsucht werden.

6. Verfahren nach einem der vorhergehenden Ansprüche, wobei die Anzeige verschiedener Resourcen-Typen auf dem Anzeigemittel (3) derart erfolgt, dass unterscheidbar ist, ob zugehörige Resourcendateien in den zugeordneten Verzeichnissen vorhanden sind oder nicht vorhanden sind.

7. Verfahren nach Anspruch 6, wobei Resourcen-Typen, zu denen keine Resourcendateien vorhanden sind, ausgegraut angezeigt werden.

8. Verfahren nach einem der vorhergehenden Ansprüche, wobei die ausgewählten Resourcenverzeichnisse und/oder Resourcendateien mit ihren jeweiligen Suchreihenfolgen als Profil abgespeichert werden.

9. Verfahren nach Anspruch 8, wobei zur Erstellung eines nachfolgenden Dokumentenbearbeitungsauftrages ein Profil aus mehreren zuvor erstellten Profilen ausgewählt wird.

10. Verfahren nach einem der vorhergehenden Ansprüche, wobei der Dokumentenbearbeitungsauftrag ein Druckauftrag ist.

11. Verfahren nach einem der vorhergehenden Ansprüche, wobei der Dokumentenbearbeitungsauftrag ein Archivierungsauftrag ist.

12. Computer (2) zum Erstellen von Dokumentenbearbeitungsaufträgen aus variablen, seitenindividuellen Daten und aus Resourcendaten, die für eine Vielzahl von Seiten verwendbar sind, wobei
(a) in einem Dokumentenbearbeitungsauftrag Steuerungsdaten enthalten sind, die angeben, welche Resourcendaten für den Dokumentenbearbeitungsauftrag benötigt werden,
(b) die Resourcendaten als Dateien in mindestens einem Verzeichnis des Computers (2) gespeichert sind und
(c) die Resourcendateien mittels eines auf dem Computer (2) ablaufenden Computerprogramms verwaltet werden, wobei
(c1) die Reihenfolge zum Suchen einer benötigten Resource verzeichnisweise und/oder dateiweise vom Benutzer festlegbar ist (30, 31),
(c2) den Verzeichnissen und/oder Resourcendateien zusätzlich zu den im Computer vergebenen Systemnamen frei wählbare Aliasnamen vom Benutzer zuordenbar sind (26) und
(c3) vom Benutzer zwischen einem ersten Ansichtsmodus, in dem die Resourcen mit ihrem Aliasnamen auf einem Anzeigemittel (3) angezeigt werden und einem zweiten Ansichtsmodus, in dem die Resourcendateien mit ihrem Systemnamen auf dem Anzeigemittel (3) angezeigt werden, umgeschaltet werden kann (25).

13. Computer nach Anspruch 12, auf dem ein Computerprogramm installiert ist, das ein Verfahren nach einem der Ansprüche 2 bis 11 bewirkt.

14. Computerprogramm zum Erstellen von Dokumentenbearbeitungsaufträgen aus variablen, seitenindividuellen Daten und aus Resourcendaten, die für eine Vielzahl von Seiten verwendbar sind, an einen Computer (2), wobei
(a) in einem Dokumentenbearbeitungsauftrag Steuerungsdaten enthalten sind, die angeben, welche Resourcendaten für den Dokumentenbearbeitungsauftrag benötigt werden,
(b) die Resourcendaten als Dateien in mindestens einem Verzeichnis eines Computers (2) gespeichert sind und
(c) die Resourcendateien mittels des Computerprogramms verwaltet werden, wobei
(c1) die Reihenfolge zum Suchen einer benötigten Resource verzeichnisweise und/oder dateiweise vom Benutzer festlegbar ist (30, 31).
(c2) den Verzeichnissen und/oder Resourcendateien zusätzlich zu den im Computer (2) vergebenen Systemnamen frei wählbare Aliasnamen vom Benutzer zuordenbar sind (26) und
(c3) vom Benutzer zwischen einem ersten Ansichtsmodus, in dem die Resourcen mit ihrem Aliasnamen auf einem Anzeigemittel (3) angezeigt werden und einem zweiten Ansichtsmodus, in dem die Resourcendateien mit ihrem Systemnamen auf dem Anzeigemittel (3) angezeigt werden, umgeschaltet werden kann (25).

15. Computerprogramm nach Anspruch 14, das bei seinem Ablauf auf dem Computer (2) einen Verfahrensablauf nach einem der Ansprüche 2 bis 11 bewirkt.

## Claims

1. Method for producing a document processing order from variable, page-individual data and from resource data that can be applied to a multiplicity of pages, wherein
(a) the document processing order contains control data that indicate which resource data are required for the document processing order,
(b) the resource data are stored as data files in at least one directory of a computer (2), and
(c) the resource data files are managed by means of a computer program, with which
(c1) the sequence for searching for a required resource by directory and/or by data file can be determined (30, 31) by the user,
(c2) the directories and/or resource data files can be allocated (26) freely selectable aliases by the user in addition to the system names assigned in the computer (2), and
(c3) it is possible for the user to switch (25) between a first display mode, in which the resources are displayed on a display means (3) with their aliases, and a second display mode in which the resource data files are displayed on the display means (3) with their system names.

2. The method according to claim 1, wherein in an availability window (20) displayed by the computer program on the display means (3), the resource directories and/or resource data files available in the computer (2) are shown, and the resource directories and/or resource data files selected for the document processing order are shown in a selection window (21) displayed on the display means (3).

3. The method according to claim 2, wherein the resource directories and/or resource data files are marked in the availability window (20), and, by selecting a transfer key (34), are allocated to the document processing order and are shown in the selection window (21).

4. The method according to one of the preceding claims, wherein the computer program is used to determine which data file components, in particular which data file end markings, are used for searching for resource data files of a predetermined resource type.

5. The method according to claim 4, wherein the selected data file components are used to determine the sequence in which the allocated resource data files are searched.

6. The method according to one of the preceding claims, wherein the display of various resource types on the display means (3) takes place in such a way that it can be distinguished whether associated resource data files are present or are not present in the allocated directories.

7. The method according to claim 6, wherein resource types for which no resource data files are present are displayed in greyed-out fashion.

8. The method according to one of the preceding claims, wherein the selected resource directories and/or resource data files are stored with their respective search sequences as a profile.

9. The method according to claim 8, wherein in order to produce a subsequent document processing order, a profile is selected from a plurality of previously produced profiles.

10. The method according to one of the preceding claims, wherein the document processing order is a print order.

11. The method according to one of the preceding claims, wherein the document processing order is an archiving order.

12. A computer (2) for producing document processing orders from variable, page-individual data and from resource data that can be applied to a multiplicity of pages, wherein
(a) a document processing order contains control data that indicate which resource data are required for the document processing order,
(b) the resource data are stored as data files in at least one directory of the computer (2), and
(c) the resource data files are managed by means of a computer program that runs on-the computer (2), wherein
(c1) the sequence for searching for a required resource by directory and/or by data file can be determined (30, 31) by the user,
(c2) the directories and/or resource data files can be allocated (26) freely selectable aliases by the user in addition to the system names assigned in the computer, and
(c3) it is possible for the user to switch (25) between a first display mode, in which the resources are displayed on a display means (3) with their aliases, and a second display mode in which the resource data files are displayed on the display means (3) with their system names.

13. The computer according to claim 12, on which a computer program is installed which executes a method as recited in one of the claims 2 to 11.

14. A computer program for producing document processing orders from variable, page-individual data and from resource data that can be applied to a multiplicity of pages on a computer (2), wherein
(a) a document processing order contains control data that indicate which resource data are required for the document processing order,
(b) the resource data are stored as data files in at least one directory of a computer (2), and
(c) the resource data files are managed by means of a computer program, wherein
(c1) the sequence for searching for a required resource by directory and/or by data file can be determined (30, 31) by the user,
(c2) the directories and/or resource data files can be allocated (26) freely selectable aliases by the user in addition to the system names assigned in the computer (2), and
(c3) it is possible for the user to switch (25) between a first display mode, in which the resources are displayed on a display means (3) with their aliases, and a second display mode in which the resource data files are displayed on the display means (3) with their system names.

15. The computer program according to claim 14, which, when running on the computer (2) executes a method sequence according to one of claims 2 to 11.

## Revendications

1. Procédé pour l'établissement d'une commande de traitement de documents à partir de données individuelles de pages et à partir de données ressources qui peuvent être utilisées pour une pluralité de pages, dans lequel:
(a) dans la commande de traitement de documents sont contenues des données de commande qui indiquent quelles données ressources sont nécessaires pour la commande de traitement de documents,
(b) les données ressources sont mémorisées sous forme de fichiers dans au moins un répertoire d'un ordinateur (2), et
(c) les fichiers ressources sont gérés au moyen d'un programme informatique avec lequel
(c1) la séquence pour la recherche d'une ressource nécessaire peut être définie par l'utilisateur par répertoires et/ou par fichiers (30, 31),
(c2) des alias librement choisis peuvent être attribués par l'utilisateur aux répertoires et/ou aux fichiers ressources en plus des noms de système donnés dans l'ordinateur (2), et
(c3) l'utilisateur peut basculer entre un premier mode de visualisation dans lequel les ressources sont affichées sur un moyen d'affichage (3) sous leur alia, et un deuxième mode de visualisation dans lequel les fichiers ressources sont affichés sur le moyen d'affichage (3) sous leur nom de système (25).

2. Procédé selon la revendication 1, dans lequel les répertoires ressources et/ou les fichiers ressources disponibles dans l'ordinateur (2) sont représentés dans une fenêtre de disponibilité (20) affichée sur le moyen d'affichage (3), et les répertoires ressources et/ou les fichiers ressources sélectionnés pour la commande de traitement de documents sont affichés dans une fenêtre de sélection (21) affichée sur le moyen d'affichage (3).

3. Procédé selon la revendication 2, dans lequel les répertoires ressources et/ou les fichiers ressources sont mis en évidence dans la fenêtre de disponibilité (20), et sont affectés à la commande de traitement de documents et représentés dans la fenêtre de sélection (21) par la sélection d'une touche de transfert (34).

4. Procédé selon l'une des revendications précédentes, dans lequel on définit au moyen du programme informatique quels composants de fichiers, en particulier quelles dénominations de fichiers, sont utilisés pour la recherche de fichiers ressources d'un type de ressources prédéterminé.

5. Procédé selon la revendication 4, dans lequel on définit au moyen des composants de fichiers sélectionnés selon quelle séquence les fichiers ressources associés sont recherchés.

6. Procédé selon l'une des revendications précédentes, dans lequel l'affichage de différents types de ressources sur le moyen d'affichage (3) se fait de telle manière qu'il est possible de distinguer si les fichiers ressources concernés sont présents ou ne sont pas présents dans les répertoires associés.

7. Procédé selon la revendication 6, dans lequel les types de ressources pour lesquels aucun fichier ressources n'est disponible sont affichés en grisé.

8. Procédé selon l'une des revendications précédentes, dans lequel les répertoires ressources et/ou les fichiers ressources sélectionnés sont mémorisés chacun avec leur séquence de recherche sous la forme d'un profil.

9. Procédé selon la revendication 8, dans lequel, pour l'établissement d'une commande de traitement de documents suivante, on sélectionne un profil parmi plusieurs profils précédemment définis.

10. Procédé selon l'une des revendications précédentes, dans lequel la commande de traitement de documents est une commande d'impression.

11. Procédé selon l'une des revendications précédentes, dans lequel la commande de traitement de documents est une commande d'archivage.

12. Ordinateur (2) pour l'établissement d'une commande de traitement de documents à partir de données individuelles de pages et de données ressources qui peuvent être utilisées pour une pluralité de pages, avec lequel :
(a) dans une commande de traitement de documents sont contenues des données de commande qui indiquent quelles données ressources sont nécessaires pour la commande de traitement de documents,
(b) les données ressources sont mémorisées sous forme de fichiers dans au moins un répertoire de l'ordinateur (2), et
(c) les fichiers ressources sont gérés au moyen d'un programme informatique avec lequel
(c1) la séquence pour la recherche d'une ressource nécessaire peut être définie par l'utilisateur par répertoires et/ou par fichiers (30, 31)
(c2) des alias librement choisis peuvent être attribués par l'utilisateur aux répertoires et/ou aux fichiers ressources en plus des noms de système donnés dans l'ordinateur (2), et
(c3) l'utilisateur peut basculer entre un premier mode de visualisation dans lequel les ressources sont affichées sur un moyen d'affichage (3) sous leur alia, et un deuxième mode de visualisation dans lequel les fichiers ressources sont affichés sur le moyen d'affichage (3) sous leur nom de système (25).

13. Ordinateur selon la revendication 12, sur lequel est installé un programme informatique qui déclenche un procédé selon l'une des revendications 2 à 11.

14. Programme informatique pour l'établissement sur un ordinateur (2) d'une commande de traitement de documents à partir de données individuelles de pages et à partir de données ressources qui peuvent être utilisées pour une pluralité de pages, dans lequel :
(a) dans une commande de traitement de documents sont contenues des données de commande qui indiquent quelles données ressources sont nécessaires pour la commande de traitement de documents,
(b) les données ressources sont mémorisées sous forme de fichiers dans au moins un répertoire d'un ordinateur (2), et
(c) les fichiers ressources sont gérés au moyen du programme informatique dans lequel
(c1) la séquence pour la recherche d'une ressource nécessaire peut être définie par l'utilisateur par répertoires et/ou par fichiers (30, 31),
(c2) des alias librement choisis peuvent être attribués par l'utilisateur aux répertoires et/ou aux fichiers ressources en plus des noms de système donnés dans l'ordinateur (2), et
(c3) l'utilisateur peut basculer entre un premier mode de visualisation dans lequel les ressources sont affichées sur un moyen d'affichage (3) sous leur alia, et un deuxième mode de visualisation dans lequel les fichiers ressources sont affichés sur le moyen d'affichage (3) sous leur nom de système (25).

15. Programme informatique selon la revendication 14, qui déclenche le déroulement d'un procédé selon l'une des revendications 2 à 11 lorsqu'il est lancé sur l'ordinateur (2).
